# EUROPEAN PATENT APPLICATION

(11) **EP 4 568 343 A1**
(43) Date of publication of application: **11.06.2025**
(21) Application number: 23849208.6
(22) Date of filing: 18.07.2023
(51) Int. Cl.: H04W 36/00

(54) **INFORMATION TRANSMISSION METHOD AND APPARATUS, AND DEVICE**

(30) Priority: 05.08.2022 CN 202210937510
(71) Applicant: Datang Mobile Communications Equipment Co., Ltd., Beijing 100085 (CN)
(72) Inventor: NI, Chunlin, Beijing 100085 (CN); ZHANG, Bufang, Beijing 100085 (CN)
(74) Representative: Studio Torta S.p.A.
(86) International application number: PCT/CN2023/107908
(87) International publication number: WO 2024/027500

(57) **Abstract**

Provided are an information communication method, apparatus and device. The information communication method includes: receiving conditional handover request information transmitted by a second master node; adding a secondary node according to the conditional handover request information, and taking a secondary node that is successfully added as a candidate secondary node; and transmitting handover request confirmation information to the second master node according to the candidate secondary node, where the handover request confirmation information includes: first configuration information of the first master node and the candidate secondary node, a handover command, and a handover execution condition and/or auxiliary information.

## Description

### CROSS-REFERENCE TO RELATED APPLICATION

This application claims a priority to Chinese Patent Application No. 202210937510.6 filed on August 5, 2022, the disclosures of which are incorporated by reference herein in their entirety.

### TECHNICAL FIELD

The present disclosure relates to the field of communication technologies, and in particular to an information communication method, apparatus and device.

### BACKGROUND

In order to increase the robustness and reliability of mobility, conditional handover is introduced in related technologies. However, when a terminal establishes a dual connection configuration, it currently only supports that a candidate target master node (MN) corresponds to one secondary node (SN), and it does support that one candidate target MN configures multiple SNs (that is, multiple candidate target SNs) that is to be added conditionally. Thus, the requirement of the terminal cannot be well met.

From the above, the solution for configuring conditional handover in the related technologies has defects such as being unable to support configuring multiple SNs for one candidate target MN.

### SUMMARY

The present disclosure is to provide an information communication method, apparatus and device, to solve the problem in the related technologies that the solution for configuring conditional handover cannot support configuring multiple SNs for one candidate target MN.

In order to solve the above technical problems, an embodiment of the present disclosure provides an information communication method, applied to a first master node, including:
receiving conditional handover request information transmitted by a second master node;
adding a secondary node according to the conditional handover request information, and taking a secondary node that is successfully added as a candidate secondary node; and
transmitting handover request confirmation information to the second master node according to the candidate secondary node,
where the handover request confirmation information includes: first configuration information of the first master node and the candidate secondary node, a handover command, and a handover execution condition and/or auxiliary information.

Optionally, the adding a secondary node according to the conditional handover request information, and taking a secondary node that is successfully added as a candidate secondary node includes:
determining at least one first secondary cell group corresponding to a first master cell group according to the conditional handover request information, where the first master cell group corresponds to the first master node; and
adding the secondary node according to the at least one first secondary cell group, and taking at least one secondary node that is successfully added as the candidate secondary node.

Optionally, the handover request information includes: second configuration information of a second master cell group and a second secondary cell group, and the second master cell group and the second secondary cell group correspond to the second master node, the determining at least one first secondary cell group corresponding to a first master cell group according to the conditional handover request information includes: determining at least one first secondary cell group corresponding to the first master cell group according to the second configuration information.

Optionally, the auxiliary information includes at least one of the following:
first handover information corresponding to a first measurement event, where the first handover information includes: a trigger offset;
second handover information corresponding to a second measurement event, where the second handover information includes: a first trigger threshold; or
third handover information corresponding to a third measurement event, where the third handover information includes: a second trigger threshold and a third trigger threshold,
where the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Optionally, the handover information further includes at least one of the following: hysteresis amount; or time to trigger, where the handover information includes: at least one of the first handover information, the second handover information, or the third handover information.

Optionally, the auxiliary information is used to obtain the handover execution condition.

An embodiment of the present disclosure further provides an information communication method, applied to a second master node, including:
transmitting conditional handover request information to a first master node;
receiving handover request confirmation information transmitted by the first master node;
transmitting radio resource control (RRC) reconfiguration information to a terminal according to the handover request confirmation information; and
receiving RRC reconfiguration completion information transmitted by the terminal,
where the handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition.

Optionally, the handover request information includes: second configuration information of a second master cell group and a second secondary cell group, the second master cell group and the second secondary cell group correspond to the second master node.

Optionally, the auxiliary information includes at least one of the following:
first handover information corresponding to a first measurement event, where the first handover information includes: a trigger offset;
second handover information corresponding to a second measurement event, where the second handover information includes: a first trigger threshold; or
third handover information corresponding to a third measurement event, where the third handover information includes: a second trigger threshold and a third trigger threshold,
where the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Optionally, the handover information further includes at least one of the following: hysteresis amount; or time to trigger, where the handover information includes: at least one of the first handover information, the second handover information, or the third handover information.

Optionally, the auxiliary information is used to obtain the handover execution condition, before transmitting the radio resource control (RRC) reconfiguration information to the terminal, the method further includes: obtaining the handover execution condition according to the auxiliary information, in a case where the handover request confirmation information includes the auxiliary information and does not include the handover execution condition.

An embodiment of the present disclosure further provides an information communication method, applied to a terminal, including:
receiving radio resource control (RRC) reconfiguration information transmitted by a second master node; and
transmitting RRC reconfiguration completion information to the second master node according to the RRC reconfiguration information,
where the RRC reconfiguration information includes: first configuration information of the first master node and a candidate secondary node, and a handover execution condition; and the candidate secondary node includes at least one secondary node.

An embodiment of the present disclosure further provide an information communication apparatus. The information communication apparatus is a first master node, and includes a memory, a transceiver, and a processor. The memory is configured to store a computer program; the transceiver is configured to transmit and receive data under the control of the processor; the processor is configured to read the computer program in the memory to perform the following operations:
receiving, through the transceiver, conditional handover request information transmitted by a second master node;
adding a secondary node according to the conditional handover request information, and taking a secondary node that is successfully added as a candidate secondary node; and
transmitting, through the transceiver, handover request confirmation information to the second master node according to the candidate secondary node,
where the handover request confirmation information includes: first configuration information of the first master node and the candidate secondary node, a handover command, and a handover execution condition and/or auxiliary information.

Optionally, the adding a secondary node according to the conditional handover request information, and taking a secondary node that is successfully added as a candidate secondary node includes:
determining at least one first secondary cell group corresponding to a first master cell group according to the conditional handover request information, where the first master cell group corresponds to the first master node; and
adding the secondary node according to the at least one first secondary cell group, and taking at least one secondary node that is successfully added as the candidate secondary node.

Optionally, the handover request information includes: second configuration information of a second master cell group and a second secondary cell group, and the second master cell group and the second secondary cell group correspond to the second master node, the determining at least one first secondary cell group corresponding to a first master cell group according to the conditional handover request information includes: determining at least one first secondary cell group corresponding to the first master cell group according to the second configuration information.

Optionally, the auxiliary information includes at least one of the following:
first handover information corresponding to a first measurement event, where the first handover information includes: a trigger offset;
second handover information corresponding to a second measurement event, where the second handover information includes: a first trigger threshold; or
third handover information corresponding to a third measurement event, where the third handover information includes: a second trigger threshold and a third trigger threshold,
where the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Optionally, the handover information further includes at least one of the following: hysteresis amount; or time to trigger, where the handover information includes: at least one of the first handover information, the second handover information, or the third handover information.

Optionally, the auxiliary information is used to obtain the handover execution condition.

An embodiment of the present disclosure further provides an information communication apparatus. The information communication apparatus is a second master node, and includes a memory, a transceiver, and a processor. The memory is configured to store a computer program; the transceiver is configured to transmit and receive data under the control of the processor; the processor is configured to read the computer program in the memory to perform the following operations:
transmitting, through the transceiver, conditional handover request information to a first master node;
receiving, through the transceiver, handover request confirmation information transmitted by the first master node;
transmitting, through the transceiver, radio resource control (RRC) reconfiguration information to a terminal according to the handover request confirmation information; and
receiving, through the transceiver, RRC reconfiguration completion information transmitted by the terminal,
where the handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition.

Optionally, the handover request information includes: second configuration information of a second master cell group and a second secondary cell group, the second master cell group and the second secondary cell group correspond to the second master node.

Optionally, the auxiliary information includes at least one of the following:
first handover information corresponding to a first measurement event, where the first handover information includes: a trigger offset;
second handover information corresponding to a second measurement event, where the second handover information includes: a first trigger threshold; or
third handover information corresponding to a third measurement event, where the third handover information includes: a second trigger threshold and a third trigger threshold,
where the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Optionally, the handover information further includes at least one of the following: hysteresis amount; or time to trigger, where the handover information includes: at least one of the first handover information, the second handover information, or the third handover information.

Optionally, the auxiliary information is used to obtain the handover execution condition, the operation further includes: before transmitting the radio resource control (RRC) reconfiguration information to the terminal, obtaining the handover execution condition according to the auxiliary information, in a case where the handover request confirmation information includes the auxiliary information and does not include the handover execution condition.

An embodiment of the present disclosure also provides an information communication apparatus. The information communication apparatus is a terminal, and includes a memory, a transceiver, and a processor. The memory is configured to store a computer program; the transceiver is configured to transmit and receive data under the control of the processor; the processor is configured to read the computer program in the memory to perform the following operations:
receiving, through the transceiver, radio resource control (RRC) reconfiguration information transmitted by a second master node; and
transmitting, through the transceiver, RRC reconfiguration completion information to the second master node according to the RRC reconfiguration information,
where the RRC reconfiguration information includes: first configuration information of the first master node and a candidate secondary node, and a handover execution condition; and the candidate secondary node includes at least one secondary node.

An embodiment of the present disclosure further provides an information communication apparatus, applied to a first master node, including:
a first receiving unit, configured to receive conditional handover request information transmitted by a second master node;
a first processing unit, configured to add a secondary node according to the conditional handover request information, and use a successfully added secondary node as a candidate secondary node; and
a first transmitting unit, configured to transmit handover request confirmation information to the second master node according to the candidate secondary node; where the handover request confirmation information includes: first configuration information of the first master node and a candidate secondary node, a handover command, and a handover execution condition and/or auxiliary information.

Optionally, the adding a secondary node according to the conditional handover request information, and taking a secondary node that is successfully added as a candidate secondary node includes:
determining at least one first secondary cell group corresponding to a first master cell group according to the conditional handover request information, where the first master cell group corresponds to the first master node; and
adding the secondary node according to the at least one first secondary cell group, and taking at least one secondary node that is successfully added as the candidate secondary node.

Optionally, the handover request information includes: second configuration information of a second master cell group and a second secondary cell group, and the second master cell group and the second secondary cell group correspond to the second master node, the determining at least one first secondary cell group corresponding to a first master cell group according to the conditional handover request information includes: determining at least one first secondary cell group corresponding to the first master cell group according to the second configuration information.

Optionally, the auxiliary information includes at least one of the following:
first handover information corresponding to a first measurement event, where the first handover information includes: a trigger offset;
second handover information corresponding to a second measurement event, where the second handover information includes: a first trigger threshold; or
third handover information corresponding to a third measurement event, where the third handover information includes: a second trigger threshold and a third trigger threshold,
where the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Optionally, the handover information further includes at least one of the following: hysteresis amount; or time to trigger, where the handover information includes: at least one of the first handover information, the second handover information, or the third handover information.

Optionally, the auxiliary information is used to obtain the handover execution condition.

An embodiment of the present disclosure further provides an information communication apparatus, applied to a second master node, including:
a second transmitting unit, configured to transmit conditional handover request information to a first master node;
a second receiving unit, configured to receive handover request confirmation information transmitted by the first master node;
a third transmitting unit, configured to transmit radio resource control (RRC) reconfiguration information to a terminal according to the handover request confirmation information; and
a third receiving unit, configured to receive RRC reconfiguration completion information transmitted by the terminal,
where the handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition.

Optionally, the handover request information includes: second configuration information of a second master cell group and a second secondary cell group, the second master cell group and the second secondary cell group correspond to the second master node.

Optionally, the auxiliary information includes at least one of the following:
first handover information corresponding to a first measurement event, where the first handover information includes: a trigger offset;
second handover information corresponding to a second measurement event, where the second handover information includes: a first trigger threshold; or
third handover information corresponding to a third measurement event, where the third handover information includes: a second trigger threshold and a third trigger threshold,
where the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Optionally, the handover information further includes at least one of the following: hysteresis amount; or time to trigger, where the handover information includes: at least one of the first handover information, the second handover information, or the third handover information.

Optionally, the auxiliary information is used to obtain the handover execution condition. The information communication apparatus further includes: a second processing unit, configured to: before transmitting the radio resource control (RRC) reconfiguration information to the terminal, the method further includes: obtaining the handover execution condition according to the auxiliary information, in a case where the handover request confirmation information includes the auxiliary information and does not include the handover execution condition.

An embodiment of the present disclosure further provides an information communication apparatus, applied to a terminal, including:
a fourth receiving unit, configured to receive radio resource control (RRC) reconfiguration information transmitted by a second master node; and
a fourth transmitting unit, configured to transmit RRC reconfiguration completion information to the second master node according to the RRC reconfiguration information,
where the RRC reconfiguration information includes: first configuration information of the first master node and a candidate secondary node, and a handover execution condition; and the candidate secondary node includes at least one secondary node.

An embodiment of the present disclosure further provides a processor-readable storage medium. The processor-readable storage medium stores a computer program, and the computer program is configured to cause a processor to perform the above information communication method applied to the first master node, or the second master node, or the terminal.

The above technical solutions of the present disclosure have the following beneficial effects. In the information communication method in the above solution, conditional handover request information transmitted by a second master node is received, a secondary node is added according to the conditional handover request information, and a secondary node that is successfully added is taken as a candidate secondary node; handover request confirmation information is transmitted to the second master node according to the candidate secondary node. The handover request confirmation information includes: first configuration information of the first master node and the candidate secondary node, a handover command, and a handover execution condition and/or auxiliary information. In this way, the objective can be achieved that one candidate master node (i.e., candidate target MN) supports configuring at least one (i.e., one or more) secondary node, and the problem in the related technologies can be well solved that the solution for configuring conditional handover cannot support configuring multiple SNs for one candidate target MN.

### BRIEF DESCRIPTION OF THE DRAWINGS

FIG. 1 is a schematic diagram of a wireless communication system architecture according to an embodiment of the present disclosure;
FIG. 2 is a first schematic flowchart of an information communication method according to an embodiment of the present disclosure;
FIG. 3 is a second schematic flow chart of an information communication method according to an embodiment of the present disclosure;
FIG. 4 is a third schematic flowchart of an information communication method according to an embodiment of the present disclosure;
FIG. 5 is a schematic flowchart of a specific implementation of an information communication method according to an embodiment of the present disclosure;
FIG. 6 is a first schematic structural diagram of an information communication apparatus according to an embodiment of the present disclosure;
FIG. 7 is a second schematic structural diagram of an information communication apparatus according to an embodiment of the present disclosure;
FIG. 8 is a third schematic structural diagram of an information communication apparatus according to an embodiment of the present disclosure;
FIG. 9 is a first schematic structural diagram of an information communication apparatus according to an embodiment of the present disclosure;
FIG. 10 is a second schematic structural diagram of an information communication apparatus according to an embodiment of the present disclosure; and
FIG. 11 is a third schematic structural diagram of an information communication apparatus according to an embodiment of the present disclosure.

### DETAILED DESCRIPTION

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

It is noted that the technical solution according to embodiments of the present disclosure may be applied to various systems, particularly to a 5G system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G New Radio (NR) system. Each of the various systems includes a terminal and a network device. The systems may further include a core network portion, such as an evolved packet system (EPS), or a 5G system (5GS).

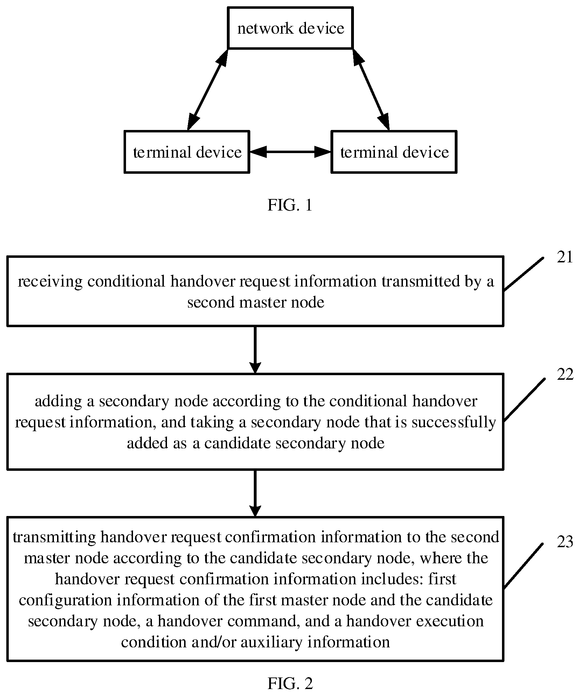

FIG. 1 shows a block diagram of a wireless communication system to which embodiments of the present disclosure are applicable. The wireless communication system includes terminal devices (shorted for terminal) and a network device.

The terminal device involved in the embodiments of the present disclosure may be a device that provides voice and/or data connectivity to a user, a handheld device with a radio connection function, or other processing devices connected to a radio modem or the like. In different systems, the names of terminal device may be different. For example, in a 5G system, a terminal device may be referred to as user equipment (UE). A wireless terminal device can communicate with one or more core networks (CNs) via a radio access network (RAN), and the wireless terminal device may be a mobile terminal device, such as a mobile phone (or referred to as "cellular" phone) and a computer with a mobile terminal device, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal device may also be referred to as a system, subscriber unit, subscriber station, mobile station, mobile, remote station, access point, remote terminal, access terminal, user terminal, user agent and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

The contents involved in the solution provided by the embodiments of the present disclosure will be first introduced hereinafter.

Conditional handover (CHO) is introduced in related technologies. A network pre-configures a certain number of cells for a UE (use equipment) as candidate cells for UE handover, and configures a certain handover condition. After the UE receives the configuration, if a certain candidate cell meets the configured handover condition, the UE spontaneously switches to the cell that meets the condition according to the condition. In configuring conditional handover, configuration can also be performed for a UE that has configured dual connectivity (DC), and a candidate MN (master node) and a candidate SN (secondary node) can be configured at the same time. Currently, for the configuration of candidate MNs and SNs, multiple conditional SNs can be configured when configuring the SN.

Specifically, in order to increase the robustness and reliability of mobility, conditional handover is defined in the 3rd generation partnership project (3GPP) standard protocol. In the case of conditional handover, the network side pre-configures multiple candidate target cells for a UE, and transmits configuration information and an execution condition of the candidate target cells to the UE in advance. When receiving the configuration information, the UE does not immediately perform handover like a normal handover; instead, it detects the candidate target cells according to the configured execution condition and configuration information. When any of the candidate target cells meets the configured execution condition, the UE executes conditional handover. After the UE accesses a target cell, a node that initiates conditional handover configuration will receive an indication that the UE has successfully accessed the target cell. The indication is transmitted by the UE or a node where the successfully accessed target cell is located. The node initiating the configuration can release other pre-configured candidate cells according to a situation.

In configuration of conditional handover, the UE may establish a dual connection configuration, which includes MN (Master Cell Group (MCG)) and SN (Secondary Cell Group (SCG)). Thus, in this case, the candidate target cell includes a primary cell (PCell) and a primary secondary cell (PScell), that is, including a combination of two nodes of the MN and the SN. For one candidate target MN node, multiple conditionally added SNs (i.e., multiple candidate target SNs) can be configured.

In configuring conditional handover (CHO) for a UE configured with dual connectivity (DC), a candidate handover target also include two nodes, namely MN and SN.

In view of the above, embodiments of the present disclosure provide an information communication method, apparatus and device, to solve the problem in the related technologies that the solution for configuring conditional handover cannot support configuring multiple SNs for one candidate target MN. The method, the apparatus and the device are based on the same inventive concept. Since principles of method, the apparatus and the device for solving the problem are similar, reference may be made to each other for implementations of the method, the apparatus and the device, and repetitions of them will not be described again.

An information communication method is provided by an embodiment of the present disclosure, which is applied to a first master node (which may be used as a target MN). As shown in FIG. 2, the method includes:
step 21: receiving conditional handover request information transmitted by a second master node;
step 22: adding a secondary node according to the conditional handover request information, and taking a secondary node that is successfully added as a candidate secondary node; and
step 23: transmitting handover request confirmation information to the second master node according to the candidate secondary node, where the handover request confirmation information includes: first configuration information of the first master node and the candidate secondary node, a handover command, and a handover execution condition and/or auxiliary information.

The second master node may be used as a source MN, which it is not limited thereto.

In the information communication method provided by the embodiment of the present disclosure, conditional handover request information transmitted by a second master node is received, a secondary node is added according to the conditional handover request information, and a secondary node that is successfully added is taken as a candidate secondary node; handover request confirmation information is transmitted to the second master node according to the candidate secondary node. The handover request confirmation information includes: first configuration information of the first master node and the candidate secondary node, a handover command, and a handover execution condition and/or auxiliary information. In this way, the objective can be achieved that one candidate master node (i.e., candidate target MN) supports configuring at least one (i.e., one or more) secondary node, and the problem in the related technologies can be well solved that the solution for configuring conditional handover cannot support configuring multiple SNs for one candidate target MN.

The adding a secondary node according to the conditional handover request information, and taking a secondary node that is successfully added as a candidate secondary node includes: determining at least one first secondary cell group corresponding to a first master cell group according to the conditional handover request information, where the first master cell group corresponds to the first master node; and adding the secondary node according to the at least one first secondary cell group, and taking at least one secondary node that is successfully added as the candidate secondary node.

In this way, candidate secondary node(s) can be accurately obtained.

In an embodiment of the present disclosure, the handover request information includes: second configuration information of a second master cell group and a second secondary cell group, and the second master cell group and the second secondary cell group correspond to the second master node, the determining at least one first secondary cell group corresponding to a first master cell group according to the conditional handover request information includes: determining at least one first secondary cell group corresponding to the first master cell group according to the second configuration information.

In this way, the first secondary cell group corresponding to the first master cell group can be accurately obtained; the first secondary cell group may or may not include the above-mentioned second secondary cell group, but is not limited to this.

The auxiliary information includes at least one of the following: (1) first handover information corresponding to a first measurement event, where the first handover information includes: a trigger offset; (2) second handover information corresponding to a second measurement event, where the second handover information includes: a first trigger threshold; or (3) third handover information corresponding to a third measurement event, where the third handover information includes: a second trigger threshold and a third trigger threshold. The first measurement event is an event that a measurement signal quality of a neighboring cell is a trigger offset higher than a measurement signal quality of a cell where a terminal is currently located. The second measurement event is an event that the measurement signal quality of the neighboring cell is higher than the first trigger threshold. The third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

In this way, the second master node can be assisted to more accurately obtain the handover execution condition based on the auxiliary information. The first measurement event corresponds to Event A3 (Neighbour becomes offset better than SpCell), that is, the measurement signal quality of the neighboring cell is higher than that of the current cell (that is, the cell where the terminal is currently located) by an offset (corresponding to the above-mentioned trigger offset). The second measurement event corresponds to Event A4 (Neighbour becomes better than threshold), that is, the measurement signal quality of the neighboring cell is higher than a threshold (corresponding to the above-mentioned first trigger threshold). The third measurement event corresponds to Event A5 (SpCell becomes worse than threshold 1 and neighbor becomes better than threshold2), that is, the measurement signal quality of the current cell (i.e., the cell where the terminal is currently located) is lower than threshold 1 (corresponding to the above-mentioned second trigger threshold), and the measurement signal quality of the neighboring cell is higher than threshold 2 (corresponding to the above-mentioned third trigger threshold).

In an embodiment of the present disclosure, the handover information further includes at least one of the following: hysteresis amount; or triggering time, where the handover information includes: at least one of the first handover information, the second handover information or the third handover information.

This can further assist the second master node in obtaining the handover execution condition more accurately based on the auxiliary information.

The auxiliary information is used to obtain the handover execution condition.

In this way, in a case where the handover request confirmation information does not include a handover execution condition, the second master node can still obtain the handover execution condition.

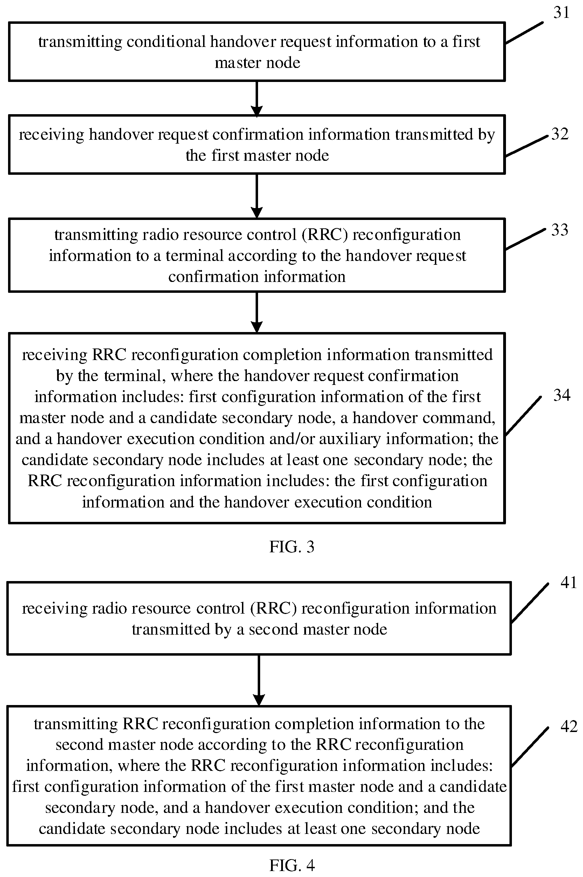

An embodiment of the present disclosure further provides an information communication method, applied to a second master node (which may be used as a source MN). As shown in FIG. 3, the method includes:
step 31: transmitting conditional handover request information to a first master node;
step 32: receiving handover request confirmation information transmitted by the first master node;
step 33: transmitting radio resource control (RRC) reconfiguration information to a terminal according to the handover request confirmation information; and
step 34: receiving RRC reconfiguration completion information transmitted by the terminal, where the handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition.

The first master node may be used as a target MN, but it is not limited to this.

In the information communication method provided by the embodiment of the present disclosure, conditional handover request information is transmitted to a first master node; handover request confirmation information transmitted by the first master node is received; radio resource control (RRC) reconfiguration information is transmitted to a terminal according to the handover request confirmation information; RRC reconfiguration completion information transmitted by the terminal is received. The handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition. In this way, the objective can be achieved that one candidate master node (i.e., candidate target MN) supports configuring at least one (i.e., one or more) secondary nodes, and the problem in the related technologies can be well solved that the solution for configuring conditional handover cannot support configuring multiple SNs for one candidate target MN.

The handover request information includes: second configuration information of a second master cell group and a second secondary cell group, the second master cell group and the second secondary cell group correspond to the second master node.

This allows the first master node to more accurately obtain the first secondary cell group corresponding to the first master cell group.

In an embodiment of the present disclosure, the auxiliary information includes at least one of the following: (1) first handover information corresponding to a first measurement event, where the first handover information includes: a trigger offset; (2) second handover information corresponding to a second measurement event, where the second handover information includes: a first trigger threshold; or (3) third handover information corresponding to a third measurement event, where the third handover information includes: a second trigger threshold and a third trigger threshold. The first measurement event is an event that a measurement signal quality of a neighboring cell is a trigger offset higher than a measurement signal quality of a cell where a terminal is currently located. The second measurement event is an event that the measurement signal quality of the neighboring cell is higher than the first trigger threshold. The third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

In this way, the second master node can be assisted to more accurately obtain the handover execution condition based on the auxiliary information. The first measurement event corresponds to Event A3 (Neighbour becomes offset better than SpCell), that is, the measurement signal quality of the neighboring cell is higher than that of the current cell (that is, the cell where the terminal is currently located) by an offset (corresponding to the above-mentioned trigger offset). The second measurement event corresponds to Event A4 (Neighbour becomes better than threshold), that is, the measurement signal quality of the neighboring cell is higher than a threshold (corresponding to the above-mentioned first trigger threshold). The third measurement event corresponds to Event A5 (SpCell becomes worse than threshold 1 and neighbor becomes better than threshold2), that is, the measurement signal quality of the current cell (i.e., the cell where the terminal is currently located) is lower than threshold 1 (corresponding to the above-mentioned second trigger threshold), and the measurement signal quality of the neighboring cell is higher than threshold 2 (corresponding to the above-mentioned third trigger threshold).

Further, the handover information further includes at least one of the following: hysteresis amount; or triggering time, where the handover information includes: at least one of the first handover information, the second handover information or the third handover information.

This can further assist the second master node in obtaining the handover execution condition more accurately based on the auxiliary information.

The auxiliary information is used to obtain the handover execution condition. Before transmitting the radio resource control (RRC) reconfiguration information to the terminal, the method further includes: obtaining the handover execution condition according to the auxiliary information, in a case where the handover request confirmation information includes the auxiliary information and does not include the handover execution condition.

In this way, in the case that the handover request confirmation information does not include any handover execution condition, the second master node can still obtain the handover execution condition. In the case that the handover request confirmation information includes the handover execution condition, operation "obtaining the handover execution condition according to the auxiliary information" may also be executed; and a final handover execution condition is obtained according to a handover execution condition included in the handover request confirmation information, and a handover execution condition obtained from the above auxiliary information, but it is not limited to this.

An embodiment of the present disclosure further provides an information communication method, applied to a terminal. As shown in FIG. 4, the method includes:
step 41: receiving radio resource control (RRC) reconfiguration information transmitted by a second master node; and
step 42: transmitting RRC reconfiguration completion information to the second master node according to the RRC reconfiguration information, where the RRC reconfiguration information includes: first configuration information of the first master node and a candidate secondary node, and a handover execution condition; and the candidate secondary node includes at least one secondary node.

The step "transmitting RRC reconfiguration completion information to the second master node according to the RRC reconfiguration information" may include: performing RRC reconfiguration according to the RRC reconfiguration information; in a case where the RRC reconfiguration is completed, transmitting RRC reconfiguration completion information to the second master node; but it is not limited to this.

In the information communication method provided by the embodiment of the present disclosure, radio resource control (RRC) reconfiguration information transmitted by a second master node is received; RRC reconfiguration completion information is transmitted to the second master node according to the RRC reconfiguration information. The RRC reconfiguration information includes: first configuration information of the first master node and a candidate secondary node, and a handover execution condition; and the candidate secondary node includes at least one secondary node. In this way, the objective can be achieved that one candidate master node (i.e., candidate target MN) supports configuring at least one (i.e., one or more) secondary node, and the problem in the related technologies can be well solved that the solution for configuring conditional handover cannot support configuring multiple SNs for one candidate target MN.

The information communication method provided by the embodiment of the present disclosure is illustrated below with an example.

In view of the above technical problems, an embodiment of the present disclosure provide an information communication method, which may be specifically implemented as a method of carrying configuration combination of an MN and multiple SNs corresponding to the MN in conditional handover request confirmation, and can realize that one candidate target MN node (corresponding to the above-mentioned first master node) can be configured with multiple (associated) conditionally added SNs (corresponding to the above-mentioned candidate secondary node). This solution mainly involves: configuring conditional handover with multiple SN nodes for a UE (user equipment) in a dual connection. A source MN (corresponding to the above-mentioned second master node) transmits a conditional handover request (corresponding to the above-mentioned conditional handover request information) to the candidate target MN (corresponding to the above-mentioned first master node), where the handover request (i.e., the conditional handover request) includes configuration information (corresponding to the above-mentioned second configuration information) of a source MCG (corresponding to the above-mentioned second master cell group) and a source SCG (corresponding to the above-mentioned second secondary cell group). After having successfully added multiple SNs, the target MN transmits conditional handover request confirmation information (corresponding to the above handover request confirmation information) to the source MN. Specifically, the conditional handover request confirmation information carries a configuration combination of the target MN and the multiple SNs (corresponding to the above-mentioned first configuration information), a handover command, a handover condition (corresponding to the above-mentioned handover execution condition), auxiliary information and the like, and may be transmitted after the target MN adds multiple conditional SNs.

A specific example of this solution is given below.

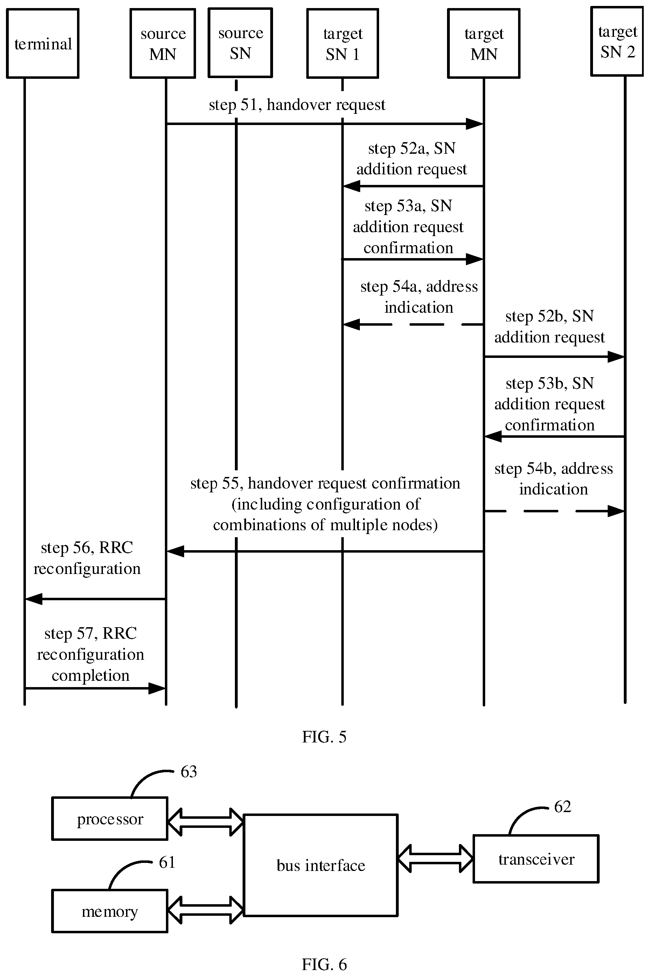

Example 1 (mainly on the side of the target MN): the target MN prepares a conditional handover procedure, in which a handover target includes an MCG (corresponding to the above-mentioned first master cell group) and multiple SCGs (corresponding to the above-mentioned first secondary cell group). Details of the conditional handover (CHO) (the target MCG is associated with multiple SCGs) are as shown in FIG. 5, the following steps are included.

In step 51, the target MN (corresponding to the above-mentioned first master node) receives a handover request message transmitted by a source MN (corresponding to the above-mentioned second master node), which carries conditional handover indication, and configuration information of the source MCG (corresponding to the above-mentioned second master cell group) and the source SCG (corresponding to the above-mentioned second secondary cell group).

In steps 52a to 54a, the target MN adds a certain SN1 (i.e., a target SN1) as a candidate SN (corresponding to the above candidate secondary node). Corresponding to the above-mentioned step of adding a secondary node according to the conditional handover request information, step 54a is optional and does not have to be performed.

In steps 52b to 54b, the target MN adds a certain SN2 (i.e., the target SN2) as a candidate SN (corresponding to the above-mentioned candidate secondary node). Corresponding to the above-mentioned step of adding a secondary node according to the conditional handover request information, step 54b is optional and does not have to be performed.

In step 55, the target MN replies with a handover request confirmation information (corresponding to the above-mentioned handover request confirmation information) to the source MN, where the handover request confirmation information includes relevant information of the target MN and the target SN. The relevant information includes: a list of combinations of the target MN and the target SN (that is, the "configuration of combinations of multiple nodes" in FIG. 5, corresponding to the above-mentioned first configuration information), and a handover command. Optionally, the relevant information includes: an execution condition. Optionally, the relevant information carries auxiliary information (in a case that the relevant information does not include any execution condition, the source MN may obtain the execution condition based on the auxiliary information).

The auxiliary information includes at least one of the following conditional handover event information (corresponding to the above-mentioned handover information):
a). conditional handover event (Event) A3 information (corresponding to the above-mentioned first handover information corresponding to the first measurement event): includes A3 offset (a3-Offset), that is, measurement trigger quantity offset (MeasTriggerQuantityOffset); optionally includes hysteresis (hysteresis) and time to trigger (timeToTrigger);
b). conditional handover EventA5 information (corresponding to the above-mentioned third handover information corresponding to the third measurement event): includes a5-Threshold1 (threshold 1), that is, MeasTriggerQuantity (trigger threshold, corresponding to the above-mentioned second trigger threshold); and 5- Threshold2 (threshold 2), that is, MeasTriggerQuantity (corresponding to the above-mentioned third trigger threshold); optionally includes hysteresis, and optionally includes timeToTrigger;
c). conditional handover EventA4 information (corresponding to the above-mentioned second handover information corresponding to the second measurement event): includes a4-Threshold, that is, MeasTriggerQuantity (corresponding to the above-mentioned first trigger threshold); optionally includes hysteresis, optionally includes timeToTrigger.

In addition, on the basis of the current handover request acknowledgment (Handover Request Acknowledge), relevant information may be added into the handover request acknowledgment message. The following is as an example.
1) Sub-IE-"Multiple Target S-NG-RAN Node List" is added into information element (IE) of the "Conditional Handover Information Acknowledge".
2) "Multiple Target S-NG-RAN Node List" IE includes: sub-IE-"Multiple Target S-NG-RAN Node Item".
3) The "Multiple Target S-NG-RAN Node List" IE includes: sub-IE-"Target S-NG-RAN node ID" and sub-IE-"Candidate PSCell List".
4) The "Candidate PSCell List" IE includes: sub-IE-"Candidate PSCell Item".
5) The "Candidate PSCell Item" IE includes the following sub-IEs:
   primary secondary cell identifier (PSCell ID), corresponding to the above-mentioned first configuration information;
   target NG-RAN node to source NG-RAN node transparent container (Target NG-RAN node To Source NG-RAN node Transparent Container), including handover command information; and
   execution condition, where this sub-IE is optional.

In step 56, UE receives a radio resource control (RRC) reconfiguration message (corresponding to the above-mentioned RRC reconfiguration information) transmitted by the source MN. The message includes configuration of conditional handover (corresponding to the above-mentioned handover execution condition), and configuration of a candidate target MCG configuration and multiple candidate target SCG associated with the candidate target MCG (corresponding to the above-mentioned first configuration information).

In step 57, UE replies with a reconfiguration completion message (corresponding to the above-mentioned RRC reconfiguration completion information), to complete the preparation phase of conditional handover.

Example 2 (mainly on the side of the source MN): the source MN prepares a conditional handover procedure, in which the handover target includes MCG (corresponding to the above-mentioned first master cell group) and multiple SCGs (corresponding to the above-mentioned first secondary cell group).

Regarding conditional handover CHO (the target MCG is associated with multiple SCGs), the specific process may be shown in FIG. 5, and the following steps are involved.

In step 51, the source MN transmits a handover request message to the target MN, which carries conditional handover indication and configuration information of the source MCG and the source SCG.

In step 55, the source MN receives the handover request confirmation information replied by the target MN, where the handover request confirmation information includes relevant information of the target MN and the target SN. The relevant information includes: a list of combinations of the target MN and the target SN, and a handover command. Optionally, the relevant information includes: an execution condition. Optionally, the relevant information carries auxiliary information.

The auxiliary information includes at least one of the following conditional handover event information:
a). conditional handover EventA3 information: includes a3-Offset, namely MeasTriggerQuantityOffset; optionally includes hysteresis, and timeToTrigger;
b). conditional handover EventA5 information: includes a5-Threshold1, namely MeasTriggerQuantity, and 5-Threshold2, namely MeasTriggerQuantity; optionally includes hysteresis, and optionally includes timeToTrigger;
c). conditional handover EventA4 information: includes a4-Threshold, namely MeasTriggerQuantity; optionally includes hysteresis, and optionally includes timeToTrigger.

In addition, on the basis of the current Handover Request Acknowledge, relevant information may be added into the handover request acknowledgment message. The following is as an example.
1) Sub-IE-"Multiple Target S-NG-RAN Node List" is added into information element (IE) of the "Conditional Handover Information Acknowledge".
2) "Multiple Target S-NG-RAN Node List" IE includes: sub-IE-"Multiple Target S-NG-RAN Node Item".
3) The "Multiple Target S-NG-RAN Node List" IE includes: sub-IE-"Target S-NG-RAN node ID" and sub-IE-"Candidate PSCell List".
4) The "Candidate PSCell List" IE includes: sub-IE-"Candidate PSCell Item".
5) The "Candidate PSCell Item" IE includes the following sub-IEs: PSCell ID; Target NG-RAN node To Source NG-RAN node Transparent Container (including handover Command information); and an execution condition (optional).

In step 56, the source MN transmits an RRC reconfiguration message to UE. The message includes conditional handover configuration, and configuration of a candidate target MCG and multiple candidate target SCG associated with the candidate target MCG.

In step 57, the source MN receives a reconfiguration completion message replied by the UE, to complete the preparation phase of conditional handover.

Example 3 (mainly on the side of UE): UE behavior in the case that the handover target includes MCG and multiple SCGs during the conditional handover procedure.

Regarding conditional handover CHO (the target MCG is associated with multiple SCGs), the specific process may be shown in FIG. 5, and the following steps are involved.

In step 56, the UE receives the RRC reconfiguration message transmitted by the source MN. The message includes conditional handover configuration, and configuration of one candidate target MCG and configuration of multiple candidate target SCG associated with the candidate target MCG. The source MN may generate an RRC reconfiguration message according to the conditional handover request reply information (corresponding to the above-mentioned handover request confirmation information) fed back by the target MN.

In step 57, the UE replies with a reconfiguration completion message to complete the preparation phase of conditional handover.

It should be noted that for relevant contents between the above examples 1 to 3, reference can be made to each other, which will not be described again here.

In view of the above, embodiments of the present disclosure provide a method for supporting one candidate target MN node to configure multiple SN nodes that are associated with the candidate target MN node, and are conditionally added in the case of dual connectivity configuration and conditional handover configuration. The handover confirmation message (i.e., the conditional handover request confirmation information) of the target MN carries a list of multiple SN nodes (corresponding to the above-mentioned first configuration information; may include target PSCell configuration of each SN node), the configuration information is transferred to the source MN, and the source MN transmits relevant configurations (including an execution condition, etc.) to the UE at one time, thereby effectively supporting one candidate target MN to configure multiple SNs.

An embodiment of the present disclosure further provides an information communication apparatus. The information communication apparatus is a first master node. As shown in FIG. 6, the apparatus includes a memory 61, a transceiver 62, and a processor 63.

The memory 61 is configured to store a computer program; the transceiver 62 is configured to transmit and receive data under the control of the processor 63; the processor 63 is configured to read the computer program in the memory 61 to perform the following operations:
receiving, through the transceiver 62, conditional handover request information transmitted by a second master node;
adding a secondary node according to the conditional handover request information, and taking a secondary node that is successfully added as a candidate secondary node; and
transmitting, through the transceiver 62, handover request confirmation information to the second master node according to the candidate secondary node, where the handover request confirmation information includes: first configuration information of the first master node and the candidate secondary node, a handover command, and a handover execution condition and/or auxiliary information.

In the information communication apparatus provided by the embodiment of the present disclosure, conditional handover request information transmitted by a second master node is received, a secondary node is added according to the conditional handover request information, and a secondary node that is successfully added is taken as a candidate secondary node; handover request confirmation information is transmitted to the second master node according to the candidate secondary node. The handover request confirmation information includes: first configuration information of the first master node and the candidate secondary node, a handover command, and a handover execution condition and/or auxiliary information. In this way, the objective can be achieved that one candidate master node (i.e., candidate target MN) supports configuring at least one (i.e., one or more) secondary node, and the problem in the related technologies can be well solved that the solution for configuring conditional handover cannot support configuring multiple SNs for one candidate target MN.

Specifically, the transceiver 62 is configured to receive and transmit data under the control of the processor 63.

In FIG. 6, the bus architecture may include any number of interconnected buses and bridges. Specifically, various circuits of one or more processors represented by the processor 63 and a memory represented by memory 61 are linked together. The bus architecture may also link various other circuits such as peripheral devices, voltage regulators, power management circuits, etc., which are well-known in the art, and therefore, no further descriptions are provided herein. The bus interface provides an interface. The transceiver 62 may be a plurality of elements, that is, include a transmitter and a receiver, and provide a unit for communicating with various other devices on transmission media, which include a wireless channel, a wired channel, an optical cable, and other transmission media. The processor 63 is responsible for managing the bus architecture and general processing, and the memory 61 can store data used by the processor 63 when performing operations.

The processor 63 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The adding a secondary node according to the conditional handover request information, and taking a secondary node that is successfully added as a candidate secondary node includes: determining at least one first secondary cell group corresponding to a first master cell group according to the conditional handover request information, where the first master cell group corresponds to the first master node; and adding the secondary node according to the at least one first secondary cell group, and taking at least one secondary node that is successfully added as the candidate secondary node.

In an embodiment of the present disclosure, the handover request information includes: second configuration information of a second master cell group and a second secondary cell group, and the second master cell group and the second secondary cell group correspond to the second master node, the determining at least one first secondary cell group corresponding to a first master cell group according to the conditional handover request information includes: determining at least one first secondary cell group corresponding to the first master cell group according to the second configuration information.

The auxiliary information includes at least one of the following: first handover information corresponding to a first measurement event, where the first handover information includes: a trigger offset; second handover information corresponding to a second measurement event, where the second handover information includes: a first trigger threshold; or third handover information corresponding to a third measurement event, where the third handover information includes: a second trigger threshold and a third trigger threshold, where the first measurement event is an event that a measurement signal quality of a neighboring cell is a trigger offset higher than a measurement signal quality of a cell where a terminal is currently located; the second measurement event is an event that the measurement signal quality of the neighboring cell is higher than the first trigger threshold; the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Further, the handover information further includes at least one of the following: hysteresis amount; or time to trigger, where the handover information includes: at least one of the first handover information, the second handover information, or the third handover information.

The auxiliary information is used to obtain the handover execution condition.

It should be noted that the above apparatus provided in the embodiments of the present disclosure can implement all method steps implemented in the above method embodiments on the side of the first master node, and can achieve the same technical effects. Therefore, the description and the beneficial effect of this embedment that are the same as the method embodiments will not be introduced here in detail.

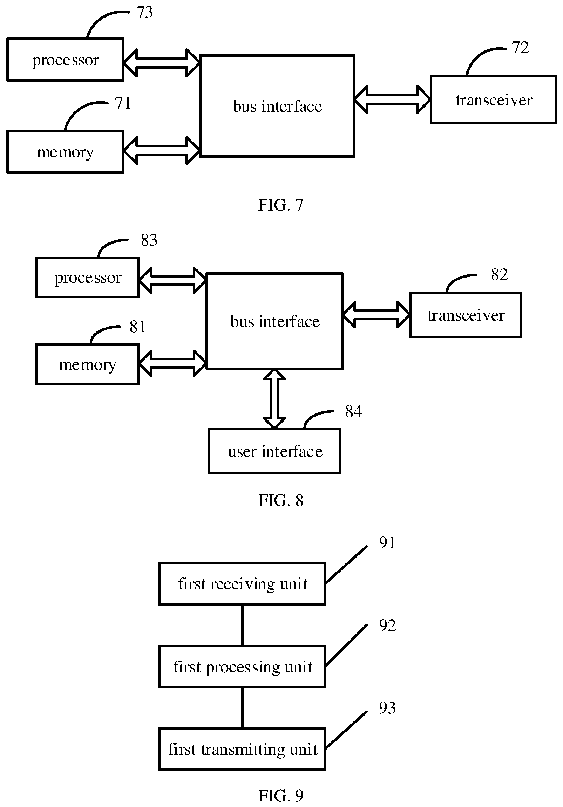

An embodiment of the present disclosure further provides an information communication apparatus. The information communication apparatus is a second master node. As shown in FIG. 7, the apparatus includes a memory 71, a transceiver 72, and a processor 73.

The memory 71 is configured to store a computer program; the transceiver 72 is configured to transmit and receive data under the control of the processor 73; the processor 73 is configured to read the computer program in the memory 71 to perform the following operations:
transmitting, through the transceiver 72, conditional handover request information to a first master node;
receiving, through the transceiver 72, handover request confirmation information transmitted by the first master node;
transmitting, through the transceiver 72, radio resource control (RRC) reconfiguration information to a terminal according to the handover request confirmation information; and
receiving, through the transceiver 72, RRC reconfiguration completion information transmitted by the terminal,
where the handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition.

In the information communication apparatus provided by the embodiment of the present disclosure, conditional handover request information to a first master node is transmitted; handover request confirmation information transmitted by the first master node is received; radio resource control (RRC) reconfiguration information is transmitted to a terminal according to the handover request confirmation information; RRC reconfiguration completion information transmitted by the terminal is received. The handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition. In this way, the objective can be achieved that one candidate master node (i.e., candidate target MN) supports configuring at least one (i.e., one or more) secondary nodes, and the problem in the related technologies can be well solved that the solution for configuring conditional handover cannot support configuring multiple SNs for one candidate target MN.

Specifically, the transceiver 72 is configured to receive and transmit data under the control of the processor 73.

In FIG. 7, the bus architecture may include any number of interconnected buses and bridges. Specifically, various circuits of one or more processors represented by the processor 73 and a memory represented by the memory 71 are linked together. The bus architecture may also link various other circuits such as peripheral devices, voltage regulators, power management circuits, etc., which are well-known in the art, and therefore, no further descriptions are provided herein. A bus interface provides an interface. The transceiver 72 may be a plurality of elements, that is, include a transmitter and a receiver, and provide a unit for communicating with various other devices on transmission media, which include a wireless channel, a wired channel, an optical cable, and other transmission media. The processor 73 is responsible for managing the bus architecture and general processing, and the memory 71 can store data used by the processor 73 when performing operations.

The processor 73 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The handover request information includes: second configuration information of a second master cell group and a second secondary cell group, the second master cell group and the second secondary cell group correspond to the second master node.

In an embodiment of the present disclosure, the auxiliary information includes at least one of the following: first handover information corresponding to a first measurement event, where the first handover information includes: a trigger offset; second handover information corresponding to a second measurement event, where the second handover information includes: a first trigger threshold; or third handover information corresponding to a third measurement event, where the third handover information includes: a second trigger threshold and a third trigger threshold. The first measurement event is an event that a measurement signal quality of a neighboring cell is a trigger offset higher than a measurement signal quality of a cell where a terminal is currently located; the second measurement event is an event that the measurement signal quality of the neighboring cell is higher than the first trigger threshold; the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Further, the handover information further includes at least one of the following: hysteresis amount; or time to trigger. The handover information includes: at least one of the first handover information, the second handover information, or the third handover information.

The auxiliary information is used to obtain the handover execution condition, before transmitting the radio resource control (RRC) reconfiguration information to the terminal, the operation further includes: obtaining the handover execution condition according to the auxiliary information, in a case where the handover request confirmation information includes the auxiliary information and does not include the handover execution condition.

It should be noted that the above apparatus provided in the embodiments of the present disclosure can implement all method steps implemented in the above method embodiments on the side of the second master node, and can achieve the same technical effects. Therefore, the description and the beneficial effect of this embedment that are the same as the method embodiments will not be introduced here in detail.

An embodiment of the present disclosure further provides an information communication apparatus. The information communication apparatus is a terminal. As shown in FIG. 8, the apparatus includes a memory 81, a transceiver 82 and a processor 83.

The memory 81 is configured to store a computer program; the transceiver 82 is configured to transmit and receive data under the control of the processor 83; the processor 83 is configured to read the computer program in the memory 81 to perform the following operations:
receiving, through the transceiver 82, RRC reconfiguration information transmitted by a second master node; and
transmitting, through the transceiver 82, RRC reconfiguration completion information to the second master node according to the RRC reconfiguration information, where the RRC reconfiguration information includes: first configuration information of the first master node and a candidate secondary node, and a handover execution condition; and the candidate secondary node includes at least one secondary node.

In the information communication apparatus provided by the embodiment of the present disclosure, a radio resource control (RRC) reconfiguration information transmitted by the second master node is received; RRC reconfiguration completion information is transmitted to the second master node according to the RRC reconfiguration information. The RRC reconfiguration information includes: first configuration information of the first master node and a candidate secondary node, and a handover execution condition; and the candidate secondary node includes at least one secondary node. In this way, the objective can be achieved that one candidate master node (i.e., candidate target MN) supports configuring at least one (i.e., one or more) secondary node, and the problem in the related technologies can be well solved that the solution for configuring conditional handover cannot support configuring multiple SNs for one candidate target MN.

Specifically, the transceiver 82 is configured to receive and transmit data under the control of the processor 83.

In FIG. 8, the bus architecture may include any number of interconnected buses and bridges. Specifically, various circuits of one or more processors represented by the processor 83 and a memory represented by the memory 81 are linked together. The bus architecture may also link various other circuits such as peripheral devices, voltage regulators, power management circuits, etc., which are well-known in the art, and therefore, no further descriptions are provided herein. The bus interface provides an interface. The transceiver 82 may be a plurality of elements, that is, include a transmitter and a receiver, and provide a unit for communicating with various other devices on transmission media, which include a wireless channel, a wired channel, an optical cable, and other transmission media. For different user equipment, the user interface 84 may also be an interface capable of externally or internally connecting to required equipment. The connected equipment includes but not limited to a keypad, a display, a speaker, a microphone, a joystick, and the like.

The processor 83 is responsible for managing the bus architecture and general processing, and the memory 81 may store data used by the processor 83 when performing operations.

Optionally, the processor 83 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any of the methods provided by the embodiments of the present disclosure according to the obtained executable instructions by invoking the computer program stored in the memory. The processor and the memory may also be physically separated.

It should be noted that the above apparatus provided in the embodiment of the present disclosure can implement all method steps implemented in the above method embodiments on the side of the terminal, and can achieve the same technical effects. Therefore, the description and the beneficial effect of this embedment that are the same as the method embodiments will not be introduced here in detail.

An embodiment of the present disclosure further provides an information communication apparatus, applied to a first master node. As shown in FIG. 9, the apparatus includes:
a first receiving unit 91, configured to receive conditional handover request information transmitted by a second master node;
a first processing unit 92, configured to add a secondary node according to the conditional handover request information, and use a successfully added secondary node as a candidate secondary node; and
a first transmitting unit 93, configured to transmit handover request confirmation information to the second master node according to the candidate secondary node; where the handover request confirmation information includes: first configuration information of the first master node and a candidate secondary node, a handover command, and a handover execution condition and/or auxiliary information.

In the information communication apparatus provided by the embodiment of the present disclosure, conditional handover request information transmitted by a second master node is received; a secondary node is added according to the conditional handover request information, and a successfully added secondary node is used as a candidate secondary node; and handover request confirmation information is transmitted to the second master node according to the candidate secondary node. The handover request confirmation information includes: first configuration information of the first master node and a candidate secondary node, a handover command, and a handover execution condition and/or auxiliary information. In this way, the objective can be achieved that one candidate master node (i.e., candidate target MN) supports configuring at least one (i.e., one or more) secondary nodes, and the problem in the related technologies can be well solved that the solution for configuring conditional handover cannot support configuring multiple SNs for one candidate target MN.

The adding a secondary node according to the conditional handover request information, and taking a secondary node that is successfully added as a candidate secondary node includes: determining at least one first secondary cell group corresponding to a first master cell group according to the conditional handover request information, where the first master cell group corresponds to the first master node; and adding the secondary node according to the at least one first secondary cell group, and taking at least one secondary node that is successfully added as the candidate secondary node.

In an embodiment of the present disclosure, the handover request information includes: second configuration information of a second master cell group and a second secondary cell group, and the second master cell group and the second secondary cell group correspond to the second master node, the determining at least one first secondary cell group corresponding to a first master cell group according to the conditional handover request information includes: determining at least one first secondary cell group corresponding to the first master cell group according to the second configuration information.

The auxiliary information includes at least one of the following: first handover information corresponding to a first measurement event, where the first handover information includes: a trigger offset; second handover information corresponding to a second measurement event, where the second handover information includes: a first trigger threshold; or third handover information corresponding to a third measurement event, where the third handover information includes: a second trigger threshold and a third trigger threshold. The first measurement event is an event that a measurement signal quality of a neighboring cell is a trigger offset higher than a measurement signal quality of a cell where a terminal is currently located. The second measurement event is an event that the measurement signal quality of the neighboring cell is higher than the first trigger threshold. The third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

In an embodiment of the present disclosure, the handover information further includes at least one of the following: hysteresis amount; or triggering time, where the handover information includes: at least one of the first handover information, the second handover information or the third handover information.

The auxiliary information is used to obtain the handover execution condition.

It should be noted that the above apparatus provided in the embodiment of the present disclosure can implement all method steps implemented in the above method embodiments on the side of the first master node, and can achieve the same technical effects. Therefore, the description and the beneficial effect of this embedment that are the same as the method embodiments will not be introduced here in detail.

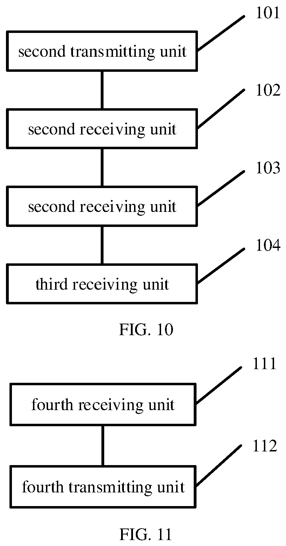

An embodiment of the present disclosure further provides an information communication apparatus, applied to a second master node. As shown in FIG. 10, the apparatus includes:
a second transmitting unit 101, configured to transmit conditional handover request information to a first master node;
a second receiving unit 102, configured to receive handover request confirmation information transmitted by the first master node;
a third transmitting unit 103, configured to transmit radio resource control (RRC) reconfiguration information to a terminal according to the handover request confirmation information; and
a third receiving unit 104, configured to receive the RRC reconfiguration completion information transmitted by the terminal; where the handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition.

In the information communication apparatus provided by the embodiment of the present disclosure, conditional handover request information to a first master node is transmitted; handover request confirmation information transmitted by the first master node is received; radio resource control (RRC) reconfiguration information is transmitted to a terminal according to the handover request confirmation information; RRC reconfiguration completion information transmitted by the terminal is received. The handover request confirmation information includes: first configuration information of the first master node and a candidate secondary node, a handover command, and a handover execution condition and/or auxiliary information; the candidate secondary node includes at least one secondary node; the RRC reconfiguration information includes: the first configuration information and the handover execution condition. In this way, the objective can be achieved that one candidate master node (i.e., candidate target MN) supports configuring at least one (i.e., one or more) secondary nodes, and the problem in the related technologies can be well solved that the solution for configuring conditional handover cannot support configuring multiple SNs for one candidate target MN.

In the embodiment of the present disclosure, handover request information includes: second configuration information of a second master cell group and a second secondary cell group, the second master cell group and the second secondary cell group correspond to the second master node.

In an embodiment of the present disclosure, the auxiliary information includes at least one of the following: first handover information corresponding to a first measurement event, where the first handover information includes: a trigger offset; second handover information corresponding to a second measurement event, where the second handover information includes: a first trigger threshold; or third handover information corresponding to a third measurement event, where the third handover information includes: a second trigger threshold and a third trigger threshold. The first measurement event is an event that a measurement signal quality of a neighboring cell is a trigger offset higher than a measurement signal quality of a cell where a terminal is currently located. The second measurement event is an event that the measurement signal quality of the neighboring cell is higher than the first trigger threshold. The third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

Further, the handover information further includes at least one of the following: hysteresis amount; or triggering time, where the handover information includes: at least one of the first handover information, the second handover information or the third handover information.

The auxiliary information is used to obtain the handover execution condition. The apparatus further includes a second processing unit, configured to: before transmitting the radio resource control (RRC) reconfiguration information to the terminal, obtain the handover execution condition according to the auxiliary information, in a case where the handover request confirmation information includes the auxiliary information and does not include the handover execution condition.

It should be noted that the above apparatus provided in the embodiments of the present disclosure can implement all method steps implemented in the above method embodiments on the side of the second master node, and can achieve the same technical effects. Therefore, the description and the beneficial effect of this embedment that are the same as the method embodiments will not be introduced here in detail.

An embodiment of the present disclosure further provides an information communication apparatus, applied to a terminal. As shown in FIG. 11, the apparatus includes:
a fourth receiving unit 111, configured to receive a radio resource control (RRC) reconfiguration information transmitted by a second master node; and
a fourth transmitting unit 112, configured to transmit RRC reconfiguration completion information to the second master node according to the RRC reconfiguration information.

The RRC reconfiguration information includes: first configuration information of the first master node and a candidate secondary node, and a handover execution condition; and the candidate secondary node includes at least one secondary node.

In the information communication apparatus provided by the embodiment of the present disclosure, a radio resource control (RRC) reconfiguration information transmitted by a second master node is received; and RRC reconfiguration completion information is transmitted to the second master node according to the RRC reconfiguration information. The RRC reconfiguration information includes: first configuration information of the first master node and a candidate secondary node, and a handover execution condition; and the candidate secondary node includes at least one secondary node. In this way, the objective can be achieved that one candidate master node (i.e., candidate target MN) supports configuring at least one (i.e., one or more) secondary node, and the problem in the related technologies can be well solved that the solution for configuring conditional handover cannot support configuring multiple SNs for one candidate target MN.

It should be noted that the above apparatus provided in the embodiments of the present disclosure can implement all method steps implemented in the above method embodiments on the side of the terminal, and can achieve the same technical effects. Therefore, the description and the beneficial effect of this embedment that are the same as the method embodiments will not be introduced here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

A processor-readable storage medium is further provided according to an embodiment of the present disclosure. The processor-readable storage medium stores a computer program, and the computer program is configured to cause a processor to perform the information communication method applied to the side of the first master node, or the side of the second master node, or the side of the terminal.

The processor-readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

The implementation embodiments of the information communication method applied to the first master node, the second master node or the terminal are all applicable to the embodiments of the processor-readable storage medium, which can also achieve the same technical effect.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. An information communication method, applied to a first master node, comprising:
receiving conditional handover request information transmitted by a second master node;
adding a secondary node according to the conditional handover request information, and taking a secondary node that is successfully added as a candidate secondary node; and
transmitting handover request confirmation information to the second master node according to the candidate secondary node,
wherein the handover request confirmation information comprises: first configuration information of the first master node and the candidate secondary node, a handover command, and a handover execution condition and/or auxiliary information.

2. The information communication method according to claim 1, wherein the adding a secondary node according to the conditional handover request information, and taking a secondary node that is successfully added as a candidate secondary node comprises:
determining at least one first secondary cell group corresponding to a first master cell group according to the conditional handover request information, wherein the first master cell group corresponds to the first master node; and
adding the secondary node according to the at least one first secondary cell group, and taking at least one secondary node that is successfully added as the candidate secondary node.

3. The information communication method according to claim 2, wherein the handover request information comprises: second configuration information of a second master cell group and a second secondary cell group, and the second master cell group and the second secondary cell group correspond to the second master node,
the determining at least one first secondary cell group corresponding to a first master cell group according to the conditional handover request information comprises:
determining at least one first secondary cell group corresponding to the first master cell group according to the second configuration information.

4. The information communication method according to claim 1, wherein the auxiliary information comprises at least one of the following:
first handover information corresponding to a first measurement event, wherein the first handover information comprises: a trigger offset;
second handover information corresponding to a second measurement event, wherein the second handover information comprises: a first trigger threshold; or
third handover information corresponding to a third measurement event, wherein the third handover information comprises: a second trigger threshold and a third trigger threshold,
wherein the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

5. The information communication method according to claim 4, wherein the handover information further comprises at least one of the following:
hysteresis amount; or
time to trigger,
wherein the handover information comprises: at least one of the first handover information, the second handover information, or the third handover information.

6. The information communication method according to claim 1, wherein the auxiliary information is used to obtain the handover execution condition.

7. An information communication method, applied to a second master node, comprising:
transmitting conditional handover request information to a first master node;
receiving handover request confirmation information transmitted by the first master node;
transmitting radio resource control (RRC) reconfiguration information to a terminal according to the handover request confirmation information; and
receiving RRC reconfiguration completion information transmitted by the terminal,
wherein the handover request confirmation information comprises: first configuration information of the first master node and a candidate secondary node, a handover command, and a handover execution condition and/or auxiliary information; the candidate secondary node comprises at least one secondary node;
the RRC reconfiguration information comprises: the first configuration information and the handover execution condition.

8. The information communication method according to claim 7, wherein the handover request information comprises: second configuration information of a second master cell group and a second secondary cell group, the second master cell group and the second secondary cell group correspond to the second master node.

9. The information communication method according to claim 7, wherein the auxiliary information comprises at least one of the following:
first handover information corresponding to a first measurement event, wherein the first handover information comprises: a trigger offset;
second handover information corresponding to a second measurement event, wherein the second handover information comprises: a first trigger threshold; or
third handover information corresponding to a third measurement event, wherein the third handover information comprises: a second trigger threshold and a third trigger threshold,
wherein the first measurement event is an event that a measurement signal quality of a neighboring cell is a trigger offset higher than a measurement signal quality of a cell where the terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

10. The information communication method according to claim 9, wherein the handover information further comprises at least one of the following:
hysteresis amount; or
time to trigger,
wherein the handover information comprises: at least one of the first handover information, the second handover information, or the third handover information.

11. The information communication method according to claim 7, wherein the auxiliary information is used to obtain the handover execution condition,
before transmitting the radio resource control (RRC) reconfiguration information to the terminal, the method further comprises:
obtaining the handover execution condition according to the auxiliary information, in a case where the handover request confirmation information comprises the auxiliary information and does not comprise the handover execution condition.

12. An information communication method, applied to a terminal, comprising:
receiving radio resource control (RRC) reconfiguration information transmitted by a second master node; and
transmitting RRC reconfiguration completion information to the second master node according to the RRC reconfiguration information,
wherein the RRC reconfiguration information comprises: first configuration information of a first master node and a candidate secondary node, and a handover execution condition; and the candidate secondary node comprises at least one secondary node.

13. An information communication apparatus, wherein the information communication apparatus is a first master node, and comprises a memory, a transceiver, and a processor,
the memory is configured to store a computer program; the transceiver is configured to transmit and receive data under the control of the processor; the processor is configured to read the computer program in the memory to perform the following operations:
receiving, through the transceiver, conditional handover request information transmitted by a second master node;
adding a secondary node according to the conditional handover request information, and taking a secondary node that is successfully added as a candidate secondary node; and
transmitting, through the transceiver, handover request confirmation information to the second master node according to the candidate secondary node,
wherein the handover request confirmation information comprises: first configuration information of the first master node and the candidate secondary node, a handover command, and a handover execution condition and/or auxiliary information.

14. The information communication apparatus according to claim 13, wherein the adding a secondary node according to the conditional handover request information, and taking a secondary node that is successfully added as a candidate secondary node comprises:
determining at least one first secondary cell group corresponding to a first master cell group according to the conditional handover request information, wherein the first master cell group corresponds to the first master node; and
adding the secondary node according to the at least one first secondary cell group, and taking at least one secondary node that is successfully added as the candidate secondary node.

15. The information communication apparatus according to claim 14, wherein the handover request information comprises: second configuration information of a second master cell group and a second secondary cell group, and the second master cell group and the second secondary cell group correspond to the second master node,
the determining at least one first secondary cell group corresponding to a first master cell group according to the conditional handover request information comprises:
determining at least one first secondary cell group corresponding to the first master cell group according to the second configuration information.

16. The information communication apparatus according to claim 13, wherein the auxiliary information comprises at least one of the following:
first handover information corresponding to a first measurement event, wherein the first handover information comprises: a trigger offset;
second handover information corresponding to a second measurement event, wherein the second handover information comprises: a first trigger threshold; or
third handover information corresponding to a third measurement event, wherein the third handover information comprises: a second trigger threshold and a third trigger threshold,
wherein the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

17. The information communication apparatus according to claim 16, wherein the handover information further comprises at least one of the following:
hysteresis amount; or
time to trigger,
wherein the handover information comprises: at least one of the first handover information, the second handover information, or the third handover information.

18. The information communication apparatus according to claim 13, wherein the auxiliary information is used to obtain the handover execution condition.

19. An information communication apparatus, wherein the information communication apparatus is a second master node, and comprises a memory, a transceiver, and a processor,
the memory is configured to store a computer program; the transceiver is configured to transmit and receive data under the control of the processor; the processor is configured to read the computer program in the memory to perform the following operations:
transmitting, through the transceiver, conditional handover request information to a first master node;
receiving, through the transceiver, handover request confirmation information transmitted by the first master node;
transmitting, through the transceiver, radio resource control (RRC) reconfiguration information to a terminal according to the handover request confirmation information; and
receiving, through the transceiver, RRC reconfiguration completion information transmitted by the terminal,
wherein the handover request confirmation information comprises: first configuration information of the first master node and a candidate secondary node, a handover command, and a handover execution condition and/or auxiliary information; the candidate secondary node comprises at least one secondary node;
the RRC reconfiguration information comprises: the first configuration information and the handover execution condition.

20. The information communication apparatus according to claim 19, wherein the handover request information comprises: second configuration information of a second master cell group and a second secondary cell group, and the second master cell group and the second secondary cell group correspond to the second master node.

21. The information communication apparatus according to claim 19, wherein the auxiliary information comprises at least one of the following:
first handover information corresponding to a first measurement event, wherein the first handover information comprises: a trigger offset;
second handover information corresponding to a second measurement event, wherein the second handover information comprises: a first trigger threshold; or
third handover information corresponding to a third measurement event, wherein the third handover information comprises: a second trigger threshold and a third trigger threshold,
wherein the first measurement event is an event that a measurement signal quality of a neighboring cell is a trigger offset higher than a measurement signal quality of a cell where the terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

22. The information communication apparatus according to claim 21, wherein the handover information further comprises at least one of the following:
hysteresis amount; or
time to trigger,
wherein the handover information comprises: at least one of the first handover information, the second handover information, or the third handover information.

23. The information communication apparatus according to claim 19, wherein the auxiliary information is used to obtain the handover execution condition, and
the operation further comprises: before transmitting the radio resource control (RRC) reconfiguration information to the terminal, obtaining the handover execution condition according to the auxiliary information, in a case where the handover request confirmation information comprises the auxiliary information and does not comprise the handover execution condition.

24. An information communication apparatus, wherein the information communication apparatus is a terminal, and comprises a memory, a transceiver and a processor,
the memory is configured to store a computer program; the transceiver is configured to transmit and receive data under the control of the processor; the processor is configured to read the computer program in the memory to perform the following operations:
receiving, through the transceiver, radio resource control (RRC) reconfiguration information transmitted by a second master node; and
transmitting, through the transceiver, RRC reconfiguration completion information to the second master node according to the RRC reconfiguration information,
wherein the RRC reconfiguration information comprises: first configuration information of the first master node and a candidate secondary node, and a handover execution condition; and the candidate secondary node comprises at least one secondary node.

25. An information communication apparatus, applied to a first master node, comprising:
a first receiving unit, configured to receive conditional handover request information transmitted by a second master node;
a first processing unit, configured to add a secondary node according to the conditional handover request information, and use a successfully added secondary node as a candidate secondary node; and
a first transmitting unit, configured to transmit handover request confirmation information to the second master node according to the candidate secondary node,
wherein the handover request confirmation information comprises: first configuration information of the first master node and a candidate secondary node, a handover command, and a handover execution condition and/or auxiliary information.

26. The information communication apparatus according to claim 25, wherein the first processing unit is configured to: determine at least one first secondary cell group corresponding to a first master cell group according to the conditional handover request information, wherein the first master cell group corresponds to the first master node; and add a secondary node according to the at least one first secondary cell group, and taking at least one secondary node that is successfully added as the candidate secondary node.

27. The information communication apparatus according to claim 26, wherein the handover request information comprises: second configuration information of a second master cell group and a second secondary cell group, and the second master cell group and the second secondary cell group correspond to the second master node; and the first processing unit is configured to determine at least one first secondary cell group corresponding to the first master cell group according to the second configuration information.

28. The information communication apparatus according to claim 25, wherein the auxiliary information comprises at least one of the following:
first handover information corresponding to a first measurement event, wherein the first handover information comprises: a trigger offset;
second handover information corresponding to a second measurement event, wherein the second handover information comprises: a first trigger threshold; or
third handover information corresponding to a third measurement event, wherein the third handover information comprises: a second trigger threshold and a third trigger threshold,
wherein the first measurement event is an event that a measurement signal quality of a neighboring cell is a trigger offset higher than a measurement signal quality of a cell where a terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

29. The information communication apparatus according to claim 28, wherein the handover information further comprises at least one of the following:
hysteresis amount; or
time to trigger,
wherein the handover information comprises: at least one of the first handover information, the second handover information, or the third handover information.

30. The information communication apparatus according to claim 25, wherein the auxiliary information is used to obtain the handover execution condition.

31. An information communication apparatus, applied to a second master node, comprising:
a second transmitting unit, configured to transmit conditional handover request information to a first master node;
a second receiving unit, configured to receive handover request confirmation information transmitted by the first master node;
a third transmitting unit, configured to transmit radio resource control (RRC) reconfiguration information to a terminal according to the handover request confirmation information; and
a third receiving unit, configured to receive RRC reconfiguration completion information transmitted by the terminal,
wherein the handover request confirmation information comprises: first configuration information of the first master node and a candidate secondary node, a handover command, and a handover execution condition and/or auxiliary information; the candidate secondary node comprises at least one secondary node; the RRC reconfiguration information comprises: the first configuration information and the handover execution condition.

32. The information communication apparatus according to claim 31, wherein the handover request information comprises: second configuration information of a second master cell group and a second secondary cell group, and the second master cell group and the second secondary cell group correspond to the second master node.

33. The information communication apparatus according to claim 31, wherein the auxiliary information comprises at least one of the following:
first handover information corresponding to a first measurement event, wherein the first handover information comprises: a trigger offset;
second handover information corresponding to a second measurement event, wherein the second handover information comprises: a first trigger threshold; or
third handover information corresponding to a third measurement event, wherein the third handover information comprises: a second trigger threshold and a third trigger threshold,
wherein the first measurement event is an event that a measurement signal quality of a neighboring cell is a trigger offset higher than a measurement signal quality of a cell where the terminal is currently located;
the second measurement event is an event that the measurement signal quality of the neighboring cell is higher than the first trigger threshold;
the third measurement event is an event that the measurement signal quality of the cell where the terminal is currently located is lower than the second trigger threshold, the measurement signal quality of the neighboring cell is higher than the third trigger threshold, and the third trigger threshold is higher than the second trigger threshold.

34. The information communication apparatus according to claim 33, wherein the handover information further comprises at least one of the following:
hysteresis amount; or
time to trigger,
wherein the handover information comprises: at least one of the first handover information, the second handover information, or the third handover information.

35. The information communication apparatus according to claim 31, wherein the auxiliary information is used to obtain the handover execution condition; and the information communication apparatus further comprises: a second processing unit, configured to: before transmitting the radio resource control (RRC) reconfiguration information to the terminal, obtain the handover execution condition according to the auxiliary information, in a case where the handover request confirmation information comprises the auxiliary information and does not comprise the handover execution condition.

36. An information communication apparatus, applied to a terminal, comprising:
a fourth receiving unit, configured to receive radio resource control (RRC) reconfiguration information transmitted by a second master node; and
a fourth transmitting unit, configured to transmit RRC reconfiguration completion information to the second master node according to the RRC reconfiguration information,
wherein the RRC reconfiguration information comprises: first configuration information of the first master node and a candidate secondary node, and a handover execution condition; and the candidate secondary node comprises at least one secondary node.

37. A processor-readable storage medium, wherein the processor-readable storage medium stores a computer program, and the computer program is configured to cause a processor to execute the information communication method according to any one of claims 1 to 6; or,
the computer program is configured to cause a processor to execute the information communication method according to any one of claims 7 to 11; or,
the computer program is configured to cause a processor to execute the information communication method according to claim 12.
